# EUROPEAN PATENT APPLICATION

(11) **EP 2 088 048 A1**
(43) Date of publication of application: **12.08.2009**
(21) Application number: 09152410.8
(22) Date of filing: 09.02.2009
(51) Int. Cl.: B60W 40/08, B60R 16/023

(54) **Method of and system for configuring of an electronic control system for controlling the operation of at least one component of a vehicle**

(30) Priority: 08.02.2008 GB 0802368
(71) Applicant: Airmax Group Plc, Verwood, Dorset, BH31 6BE (GB)
(72) Inventor: Duddle, Ashley Robert, Farenham, Hampshire PO14 1NN (GB); Perham, Stephen Henry, Walton-on-Thames, surrey KT12 3QD (GB); Mason, Lee, Lichfield, Staffordshire WS13 8NZ (GB)
(74) Representative: Lawrence, John

(57) **Abstract**

An electronic control system (2,4) for controlling the operation of at least one component (3) of a vehicle (1) includes: a microcontroller (5); programmable non-volatile memory (6), wherein the microcontroller (5) is configured to process input signals from at least one vehicle sensor to provide output signals for controlling the at least one vehicle component (3) in accordance with programme data read at least partly from the programmable non-volatile memory (6); and an interface (8) enabling a programming unit to programme at least part of the programme data into the programmable non-volatile memory (6). A method of configuring the electronic control system (2,4) includes: obtaining data based on sensor signals and pertaining to the vehicle during its operation; analysing the data based on sensor signals; determining an appropriate set of programme data based on the analysis; and causing a programming unit (10) on board the vehicle (1) to programme the appropriate set into the programmable non-volatile memory (6).

## Description

The invention relates to a method of configuring an electronic control system for controlling the operation of at least one component of a vehicle,
the electronic control system including:
a microcontroller;
programmable non-volatile memory,
wherein the microcontroller is configured to process input signals from at least one vehicle sensor to provide output signals for controlling the at least one vehicle component in accordance with programme data read at least partly from the programmable non-volatile memory; and
an interface enabling a programming unit to programme at least part of the programme data into the programmable non-volatile memory,
which method includes:
obtaining data based on sensor signals and pertaining to the vehicle during its operation;
analysing the data based on sensor signals; and determining an appropriate set of programme data based on the analysis.

The invention also relates to a system for configuring an electronic control system for controlling the operation of at least one component of a vehicle,
the electronic control system including:
a microcontroller;
programmable non-volatile memory,
wherein the microcontroller is configured to process input signals from at least one vehicle sensor to provide output signals for controlling the at least one vehicle component in accordance with programme data read at least partly from the programmable non-volatile memory, which system includes
a programming unit to programme programme data stored in the programmable non-volatile memory,
an interface for obtaining data based on sensor signals and pertaining to the vehicle during its operation; and
a data processing system for analysing the data based on sensor signals and determining an appropriate set of programme data based on the analysis.

The invention also relates to a computer programme.

US 2001/0056318 describes an integrated vehicle control system for integratedly controlling a plurality of components such as an engine or an automatic transmission mounted on a vehicle. As component control sections, an engine ECU and an AT ECU are provided. In the engine ECU and the AT ECU non-volatile memories (ROM) are provided. Stored in the memories in advance are the tuning freedom degree information, representing a category of tuning patterns settable on the side of the respective ECU, and the characteristic information representing the operation of the engine and the automatic transmission, controlled respectively by the tuning pattern set according to the tuning selection information from the manager ECU. The most suitable tuning pattern of the engine tuning patterns realisable by the engine ECU is selected on the basis of the engine tuning freedom degree information retrieved from the engine ECU. By connecting all sorts of information systems such as a navigation system or the like to the manager ECU, the drive system and the brake system of a vehicle may well be integratedly controlled in such a manner that the manager ECU retrieves the information such as gradient and altitude of a road where a vehicle is travelling at present from these information systems.

A problem of the known method is that it is based on default assumptions regarding future usage of the vehicle. The tuning pattern selected by the manager ECU offers limited scope for optimising the performance of the vehicle components to suit the actual operational needs.

It is an object of the invention to provide a method, system and computer programme that allow the operating behaviour of vehicle components to be adapted to suit the actual usage and operation of the vehicle.

This object is achieved by the method according to the invention, which is characterised by causing a programming unit on board the vehicle to programme the appropriate set into the programmable non-volatile memory. By obtaining sensor data pertaining to the vehicle during its operation, characteristics of the actual usage and operation of the vehicle can be deduced by analysing the sensor data. By determining an appropriate set of programme data based on the analysis, the performance of the vehicle component or components can be adapted to suit the determined characteristics. By causing a programming unit to programme the appropriate set into the programmable non-volatile memory, it is possible to use a bespoke set of data, allowing for better optimisation of the performance characteristics of the vehicle component to suit the actual conditions. Because it is the programme data read by the microcontroller from the programmable non-volatile memory ("Keep-Alive Memory") that is adapted, a more radical adaptation can be effected than would be possible by modifying a limited set of variables that the microcontroller may maintain in registers ("scratch pad memory") when controlling the at least one vehicle component. In effect, the control strategy can be modified. By causing a programming unit on board the vehicle to carry out the programming, adaptation to actual usage and operation of the vehicle are achievable. A further advantage is that such adaptation can be achieved without reducing the length of the service intervals of the vehicle.

In an embodiment, the data based on sensor signals and pertaining to the vehicle during its operation includes data indicative of a position of the vehicle, at least implicitly associated with timing information.

The implicit association may be through the point in time at which the data indicative of a position of the vehicle is requested or received. An effect is to obtain data that is relevant to the adaptation of an electronic control system for controlling the operation of at least one component of a vehicle. The location of the vehicle determines the environment which it is in and the demands placed on it. Environmental conditions, such as temperature, humidity, visibility, etc., have a relatively large effect on the operation of vehicle components. The demands placed on the vehicle are quite closely related to its location, for example where legal requirements, road surface conditions and typical gradients are concerned.

In an embodiment of the method, the data based on sensor signals and pertaining to the vehicle during its operation include data based on signals from at least one vehicle sensor.

An effect is to adapt control of the vehicle component(s) to relevant parameters indicative of how the vehicle is being used and of how well vehicle sub-systems are performing.

An embodiment of the method includes obtaining at least one operator profile that indicates the operating style of at least one operator.

An effect is to provide a control strategy that is appropriate to medium and/or short-term future operation of the vehicle, since the operator style is a good predictor of the demands likely to be placed on the vehicle. Thus, the adaptation moves from being purely reactive to being anticipatory.

In a variant, the operator profile(s) is or are derived at least partly on the basis of data based on signals from at least one vehicle sensor.

An effect is to provide a more objective characterisation of an operator, e.g. a driver of a car or rider of a motorbike.

In a further variant, determining an appropriate set of programme data based on the analysis includes obtaining information for identifying an operator of the vehicle and selecting an operator profile of the operator from one of a plurality of operator profiles associated with the vehicle.

This variant takes into account that a vehicle may have several regular operators. It allows for a separation of operator profiles, and contributes to improving the adaptation of the electronic control system.

In an embodiment, the set of programme data includes at least one control map, including data representative of an operating envelope and/or adaptation parameters, for an electronic control system comprising a map-based controller.

An effect is to bring about an adaptation of control strategy that is relatively easy to implement. Moreover, it is amenable to automation.

In an embodiment, the electronic control system comprises at least one Electronic Control Unit for controlling at least a component of an engine.

An effect is to adapt the vehicle's performance most effectively to the conditions under which it is operated, since the engine performance has the greatest effect on the overall vehicle performance. Moreover, in particular in the case of internal combustion engines, the engine performance requires most adaptation to changing conditions, being relatively sensitive to changing conditions and determinative of many key performance indicators, such as fuel efficiency, speed, etc.

In a variant, determining an appropriate set of programme data includes establishing a set of programme data having an effect of improving the efficiency of the engine under conditions to be expected and determined in accordance with the analysis.

An effect is to improve the fuel efficiency of the vehicle. Conventionally, engine performance is determined by factory-installed maps, which are designed on a "one-size-fits-all" basis, and are thus not optimised for any particular pattern of vehicle usage, or operating style. They tend to be biased towards reducing component wear (and hence warranty repair costs), rather than anything else. When a manufacturer releases a vehicle onto the market, it has to be able to cope with many different demands in many different environments. For example, a car has to be able to cope with poor fuel quality, poor servicing, etc., and at the same time provide reliability and economy. This means that manufacturers have to make a compromise, viz. "de-tune" the car. In many countries, such as the United Kingdom, the above-mentioned issues are of no concern. Therefore, there is scope for optimising fuel economy, which is of concern due to environmental regulations.

An embodiment of the method includes causing a programming unit on board the vehicle to programme a set of data into the programmable non-volatile memory for adjustment of use of components of the engine to modify the maximum output of an internal combustion engine.

An effect is to be able to avoid flat spots and increase fuel economy by operating at close to optimum. In effect, it allows for the electronic control system to be adapted such that the accelerator pedal becomes a means of indicating required power, as opposed to a throttle control. This embodiment is based on the recognition of the fact that internal combustion engines achieve optimum specific fuel consumption at a certain percentage of their maximum output, not just at particular ranges of Revolutions Per Minute. An implementation would, for instance, include modifying a control strategy for selectively switching cylinders on and off, based on expected engine loads.

In an embodiment, the programming unit is comprised in a unit connected to a port of an on-board diagnostic system of the vehicle.

An effect is to obviate the need for physically modifying electronic control units, and to make the method potentially suitable for after-market implementation. On-board diagnostic systems are generally standardised in terms of communication protocols and also external ports.

In an embodiment, the data based on sensor signals is obtained via a diagnostic unit plugged into a port for interrogating an on-board diagnostic system, wherein the diagnostic unit communicates with the electronic control system using at least partly a proprietary protocol of the electronic control system.

An effect is to help eliminate the dependency on the often limited maximum data rate of conventional on-board diagnostic systems. The standards for such systems are generally laid out to accommodate devices according to the lowest common denominator.

According to another aspect, the system for configuring an electronic control system for controlling the operation of at least one component of a vehicle according to the invention is characterised in that the programming unit is provided on board the vehicle and in that the system is configured to cause the programming unit to programme the appropriate set into the programmable non-volatile memory of the electronic control system.

In an embodiment, the system is configured to execute a method according to the invention.

According to another aspect of the invention, there is provided a computer programme including a set of instructions capable, when incorporated in a machine-readable medium, of causing a system having information processing capabilities to perform a method according to the invention.

The computer programme can be used locally within the vehicle or used to implement a distributed system including a server in a network with which the vehicle is arranged to interface.

The invention will be explained in further detail with reference to the accompanying drawings, in which:
Fig. 1 is a very schematic diagram of a vehicle and a telematics interface for providing mapping updates to the vehicle;
Fig. 2 is a flow chart showing a process of providing mapping updates in outline;
Fig. 3 is a simplified flow chart showing a first embodiment of a step in the method of Fig. 2; and
Fig. 4 is a simplified flow chart showing a second embodiment of a step in the method of Fig. 2.

Methods for configuring (including re-configuring) electronic control systems for vehicles are discussed herein using the example of a motor car 1. They are equally applicable to other types of vehicle, particularly motor vehicles, such as motor bikes, lorries, ships, aircraft, agricultural machinery, etc.

The car 1 includes an Engine Control Unit (ECU) 2 for controlling an internal combustion engine 3 and an electronic control unit 4 for an Electronic Stability Control (ESC) system (not shown in detail). Engine Control Units are also referred to as Power-Train Control Modules (PCM). The ECU 2 is essential to controlling electronic fuel injection. This description will focus on the ECU 2, but is equally applicable to the electronic control unit 4 of the ESC system. The ECU 2 includes a microcontroller 5 and programmable non-volatile memory, here in the shape of an EEPROM 6 (Electronically Erasable Programmable Read-Only Memory). In another embodiment, the EEPROM 6 is integrated in the microcontroller 5. In another embodiment, SRAM (Static Random Access Memory) or DRAM (Dynamic Random Access Memory) memory units backed up by a battery of the car 1 are used instead of the EEPROM 6. In yet another embodiment, flash RAM is used. The ECU 2 further includes an output stage 7 for providing output signals to engine components such as:
- fuel injectors (length of time each valve remains open);
- a fuel pump relay;
- an evaporative emissions system;
- an exhaust gas recirculation system;
- ignition timing and knock sensing components;
- an apparatus for adjusting an intake manifold length; and
- output devices for self-diagnosis of faults, indicated by a visual indicator on the ECU 2 or a malfunction indicator lamp or check engine warning light on an instrument panel of the car 1.

The output stage 7 can include a circuit known as a quad driver to produce voltage levels -these range between five and twelve Volts - necessary to operate automotive actuators

The ECU 2 also includes an interface 8 to a serial vehicle bus, e.g. a CAN (Controller Area Network) bus (not shown). The ECU 2 receives input signals from at least one vehicle sensor through the interface 8 and/or through an input stage (not shown), to which sensor leads are directly connected. Examples of sensors providing input signals include:
- an Engine Coolant Temperature (ECT) sensor;
- an Intake Air Temperature (IAT) sensor;
- a Throttle Position (TP) sensor;
- a Load sensor volume/mass air flow (VAF/MAF) sensor manifold or absolute pressure (MAP) sensor;
- a Vehicle Speed Sensor (VSS);
- a Crank Shaft Position (CSP) sensor;
- a Cam Shaft Position (CMP) sensor;
- an Engine speed (RPM) sensor;
- an Oxygen sensor (O2S);
- a Knock sensor (KS); and
- a Barometric pressure (BARO) sensor.

The MAP sensor is preferred over the VAF/MAF sensor, because it is better at responding to the addition of a forced induction system or severe changes in atmospheric pressure. In the case of a MAF sensor, the ECU 2 uses feedback from a speed sensor and a look-up table based on the assumption that there is a certain amount of airflow at a certain speed. The look-up table can be stored in the EEPROM 6, for instance.

The ECU 2 controls at least part of the functionality of the engine 3 by processing the input signals in accordance with programme data read at least partly from the EEPROM 6. The actual instructions are read from (non-reprogrammable) Read-Only Memory (ROM) (not shown), in some embodiments. Depending on the features of the car 1, the ECU 2 will have a varying list of functions to perform. In a typical car 1 with a limited set of features, the ECU 2 controls fuel delivery, timing advance and anti-smog equipment. With an increase in engine speed (RPMs), it will increase the timing setting. When the accelerator pedal is pressed down significantly, it increases fuel and air delivery in order to provide more speed, and sometimes advances the timing still further to add power. If a knock sensor detects detonation, the ECU 2 will retard the timing to preserve the engine 3. The simplest versions of the ECU 2 (e.g. those used with engines without fuel injection) do nothing more than control timing advance and smog equipment for best possible emissions, and perhaps also fuel delivery.

The use of electronic fuel injection is of benefit to the environment. The ECU 2 monitors the output from an oxygen sensor (not shown), and adjusts air flow and fuel delivery accordingly. It also controls a smog system, and will add fresh air to the exhaust, which helps to burn unburnt fuel there. Where the car 1 is fitted with a smog pump, which forcibly blows air into the exhaust system, this pump is also controlled by the ECU 2.

In a particular embodiment, the ECU 2 implements a speed limiter to keep the vehicle speed below a certain maximum. In a further embodiment, the ECU 2 implements a rev limiter, to avoid over-revving the engine 3 or reduces the engine speed when the timing advance cannot eliminate detonation. In a variant, the car 1 is provided with a combination of these latter functions, with different limits on the engine speed for different gear combinations.

Where the car 1 is fitted with variable valve timing, the ECU 2 controls intake and exhaust timing, sometimes also during valve lift and duration.

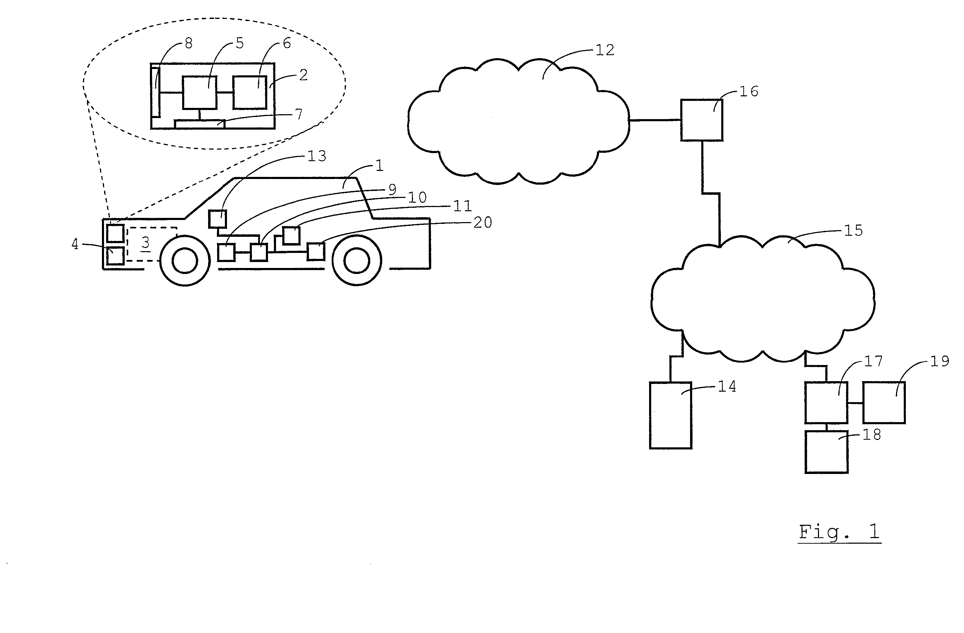

The ECU 2 implements a mapping controller, adapting its control of the engine 3 within an operating envelope using adaptation parameters. The data representative of the operating envelope and adaptation parameters are stored in the EEPROM 6, in addition to data representative of executable programme code. This data may be encrypted. The controller map data include an ignition timing map, for instance. As will be explained in detail below, the system of Fig. 1 allows for dynamic re-mapping of the ECU 2 to provide an operating envelope and adaptation parameters that are customised exactly to suit the actual use and operation of the car 1.

An external interface to the vehicle bus is provided by a port 9, into which a Remote Telematics Unit (RTU) 10 is plugged, or to which it is otherwise connected. The port 9 preferably conforms to one or more standards for on-board diagnostic systems, e.g. OBD-II or EOBD. The port 9 is a component fitted as standard to most modern cars, usually within the passenger compartment, e.g. under the dashboard. It is conventionally used for connecting diagnostic tools when the car 1 is being serviced. In the illustrated embodiment, communication is in accordance with international standard ISO 15765. In other embodiments, a different type of vehicle bus is used, and the communications between the RTU 10 and the bus are in accordance with another standard, e.g. SAE J1850, ISO 9141-2 or ISO 14230.

ODB-II has been the industry standard format for on-board diagnostics across most vehicle marques since 1996. In 1998, the Society of Automotive Engineers set a standard connector plug and a set of diagnostic protocols. However, OBD-II being a worldwide standard has its limitations in terms of speed and functionality. For performance tuning purposes, it is very limited, since the rate of information retrieval is too low. Since all new cars must support OBD-II or the European variant EOBD, the standard is the lowest common denominator. It is a standard that must be achievable by any vehicle, including middle-class cars, vans and top-of-the range cars. The standard requires that an OBD-II reader must not request data from the ECU 2 at more than a couple of single data values per second, even if the ECU 2 is capable of a much higher speed. For this reason, the RTU 10, in one embodiment, uses a custom protocol over the standard protocol for its programming and diagnostic functionality (the functionality described below in detail). This protocol is generally a protocol used by garage tools designed for identifying faults and performing key tasks such as re-tuning, electronic maintenance and re-mapping of the ECU 2. It is characterised by higher data rates than those provided by the standard protocol of the vehicle bus. In another embodiment, the RTU 10 is capable of using any one of a number of protocols.

The RTU 10 comprises a functional unit for (re-) programming the ECU 2 via the port 9 and vehicle bus. Thus, the standard mapping data stored in the EEPROM 6 can be replaced by a mapping to suit the style of the driver and the environmental conditions in which the car 1 is being operated.

In the illustrated embodiment, re-mapping can be carried out remotely through a network connection to the car 1. The RTU 10 has an interface to a cellular transceiver 11 providing a connection to a mobile phone network 12. In other embodiments, other types of interfaces to wireless networks are provided, e.g. WiMax or Bluetooth. In yet other embodiments, such a transceiver is integrated into the RTU 10.

As an alternative to re-mapping over the air, the RTU 10 can be implemented as a stand-alone device, but provided with a memory device for storing a set of data for providing any of a plurality of control maps for re-programming the ECU 2. For more versatility, the RTU 10 optionally includes a read unit (not shown) for reading a portable data carrier storing such data, e.g. an optical disk or solid-state memory device such as an SD-card, Memory Stick, USB memory key, etc.

In the illustrated embodiment, a multi-functional in-vehicle unit 13 is provided, which includes a user interface, e.g. a graphical user interface implemented by means of a touch screen. In an embodiment, the RTU 10 directs reports to the in-vehicle unit 13 via a wired or wireless connection. In another embodiment, the RTU 10 and in-vehicle unit 13 are integrated into one device. The multi-functional in-vehicle unit 13 provides a user interface that allows the user to initiate a method of re-mapping the ECU 2 in one embodiment and/or to confirm that a suggested re-mapping should take place.

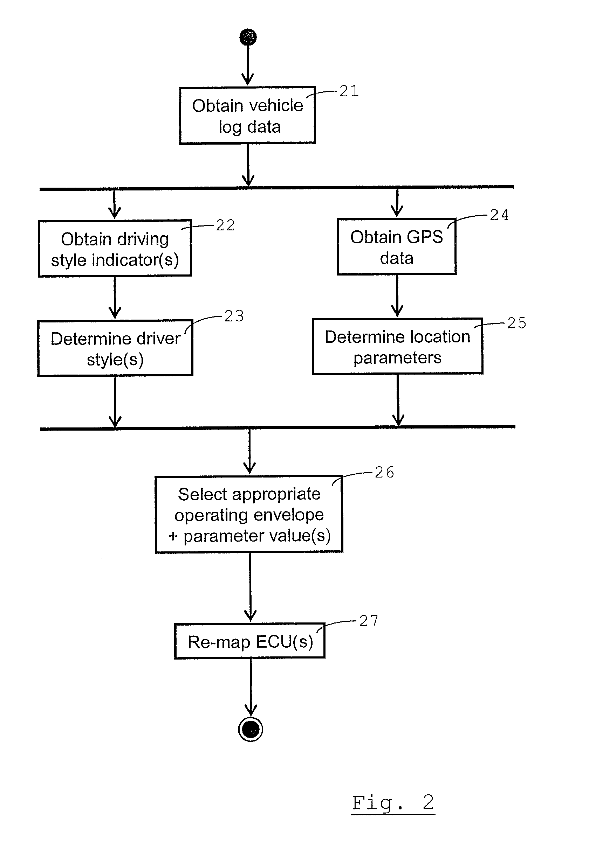

In the embodiment illustrated in Fig. 1, a remote computer 14 is configured to communicate with at least the RTU 10 via a wide-area computer network 15, e.g. the Internet, and a gateway 16 to the mobile telephone network 12. A user, e.g. a fleet manager can log in to an account on the remote computer 14 using a personal computer 17, provided with an input device 18 (mouse and/or keyboard, etc.) and an output device 19 (screen and/or printer, etc.). Thus, the user can obtain an overview of data pertaining to the car 1 and/or its driver. For example, a web interface can be provided by the remote computer 14 that allows a user of the PC 17 to view fuel economy data pertaining to the car 1. Using such data, the user may determine that it is time to re-programme the ECU 2 in order to improve the fuel economy. Optionally, the web interface may allow the user of the PC 17 to initiate a method as illustrated in Fig. 2, and to interact with the remote computer 14 as the latter carries out this method.

Referring to Fig. 1, in one embodiment, the RTU 10 is arranged to monitor physical parameters associated with the car 1. It retrieves data based on signals from at least one vehicle sensor by querying vehicle devices or monitoring data on the vehicle bus by means of its connection to the port 9. The RTU 10 records these parameters for real-time or deferred transmission to the remote computer 14 in the shape of a log. Parameters that are monitored include at least one of:
- Engine Revolutions Per Minute;
- Speed;
- Distance;
- Acceleration;
- Deceleration;
- Fuel consumption;
- Throttle position; and
- Gear ratio.

In addition, the RTU 10 interfaces with a GPS receiver 20 in order to obtain data indicative of the location of the car 1. Where a log is maintained, the location data is time-stamped. Where it is transmitted to the remote computer 14 continually, the timing information is implicit, in that the position is always a generally current one.

Steps in a method of configuring the ECU 2 are shown in Fig. 2. This method may be initiated automatically at regular intervals, when at least one performance indicator of the car 1 meets a certain criterion or upon receipt of a message from a user. Examples of messages include an SMS sent by a mobile phone (not shown), a command from the PC 17 or a message initiated using the in-vehicle unit 13.

In the illustrated method, the remote computer 14 receives the log data 21 assembled by the RTU 10. Next (step 22), it obtains those data that allow it subsequently (step 23) to determine at least one driver profile that indicates the driving style of the driver, based on the location of the car 1 and the parameters associated with the car whilst it is being driven. A suitable method for obtaining a driver profile is set out in EP-A1-1 811 481. The driving style indicators are based on the parameters monitored by the RTU 10 and mentioned above. For example, the engine RPM can be monitored to determine how aggressively the vehicle is being driven. The vehicle speed can be compared to the local speed limit using the location data. It can also be used to determine the type of road travelled on most often (city traffic, long-distance motorway driving, etc.). It may be desirable to re-map the ECU 2 to operate the engine 3 in a regime most appropriate to a particular type of road, particularly in respect of fuel economy.

It is observed that the vehicle log may cover a period of time in which two or more drivers were using the car 1. In an embodiment, the analysis is able to discern between different driver profiles, and/or to obtain an identification of the driver in association with the driving style indicators. For example, different drivers may have different ignition keys and the RTU 10 may record the data in association with an identifier corresponding to one of the keys. Alternatively, the driver may be prompted to enter an identification using the in-vehicle unit 13, or to enter a personalised code to disarm an immobiliser. In an alternative embodiment, the analysis is configured to detect transitions between time intervals corresponding to different styles of usage of the car 1. These different styles are each associated with an anonymous user (e.g. driver #1, driver #2, etc.).

Concurrently, the GPS data is retrieved (step 24) from the data received by the remote computer 14. It is used (step 25) to obtain location-dependent parameters for determining an appropriate set of programme data for the ECU 2. In an embodiment, the current location is used to search geographically tagged information in a geographic database for relevant parameters. In particular, these may include the local temperature, humidity, regulations (speed, emissions, etc.), visibility, average gradients, etc.

Next (step 26), the remote computer 14 analyses the data generated in the preceding steps 23,25, and determines an appropriate set of programme data for re-programming the ECU 2. In particular, the remote computer 14 selects the appropriate values for the operating envelope and support parameter value(s) that define the control map for the engine 3. Other programme data can be determined and include, for example, the number of cylinders to be used. This would be the case where the engine 3 is suitable for selective switching of cylinders, the number being based on expected engine load.

Finally (step 27), the RTU 10 is caused to programme the set of programme data into the EEPROM 6 of the ECU 2.

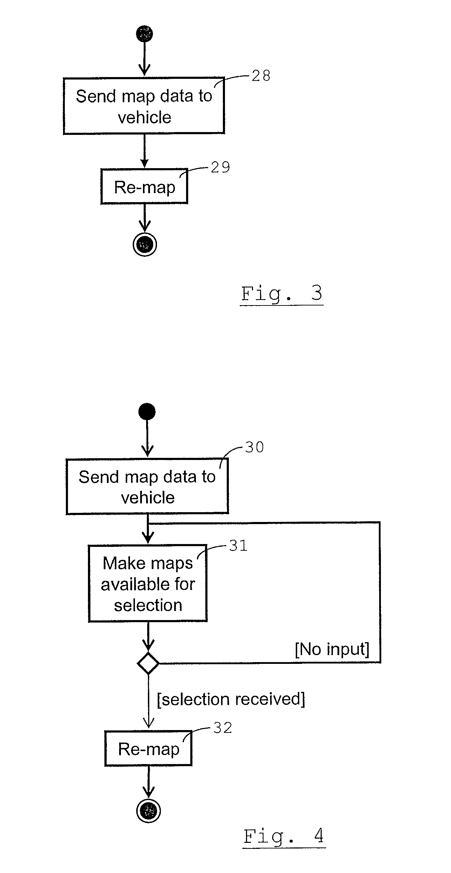

Referring to Fig. 3, the step 27 of re-mapping the ECU 2 includes a step 28 of sending the set of programme data to the RTU 10 through the network 12 in one embodiment. The RTU 10 then automatically re-maps (step 29) the ECU 2 at an appropriate time. In another embodiment (not shown), the RTU 10 is provided with a number of pre-determined sets of programme data, and the remote computer 14 transmits an identifier associated with one of these sets to the RTU 10 wirelessly. In yet another embodiment, the entire method of Fig. 2 is carried out by the RTU 10. In that case, the RTU 10 uses one of a number of sets of programme data on a data storage medium, or requests a download from the remote computer 14 to effect the step 27.

In the embodiment of Fig. 4, the remote computer 14 sends (step 30) the programme data to the RTU 10. The RTU 10 prompts (step 31) the driver to re-map the ECU 2. In an embodiment, the remote computer 14 determines an appropriate set of programme data for each of a plurality of drivers, and the step 31 of making the programme data available includes prompting the driver for information identifying him or her. In another embodiment, the driver is offered a choice of settings, depending on his or her intended use of the car 1, but taking into account the location and/or state of the car as determined by analysing data based on vehicle sensor signals. For example, the user may be offered a choice between two sets of programme data based on his driving style and the location, but one being appropriate to the car 1 when otherwise unoccupied and another to the car 1 when towing a caravan (not shown). When the appropriate user input is received, the ECU 2 is re-programmed (step 32).

Effects attainable using the systems and methods described above include one or more of the following: increased fuel economy, increased performance, increased drivability, decreased turbo lag and wear, less unburnt fuel (soot in Diesel engines), lower emissions, and a lower fuel bill. The results will vary from vehicle to vehicle, the most prominent effects being achieved in vehicles with a forced induction engine 3.

In one scenario, the driving performance of a vehicle may be controlled dynamically over time by changing the mapping in the ECU. For example, if a driver, or a particular user, is considered less safe a driver than other users, then the vehicle may be controlled, remotely via the ECU for example, to have a reduced driving performance capability. It may be limited to reduce the chances of the driver having an accident. A difficult to drive sports car may, for example, be remapped to drive like a much less powerful vehicle (a typical budget entry-level compact car, for example). The reduced performance mapping could be adjusted/reprogrammed as the driver's experience, increased, or than measured driving performance improved.

It will be appreciated that in many embodiments we can log the driving profile of a particular person (e.g. how fast they accelerate, how hard they brake, when they change gears, etc.), to gain knowledge of that person's driving profile and we can then use that personal knowledge to re-map the ECU for an optimum map based on the driver behaviour. That optimum would be optimum fuel use, optimum safety (or a safety-led constraint on vehicle performance), or on other criteria. We also use, in many embodiments, geo-location related/coded information. By knowing where the vehicle is we can know that it is on a motorway (for example) and map the ECU whilst it is on the motorway to tailor the performance of the engine/other components to suit that environment for driving. Also, we can map the ECU to suit atmospheric or climate conditions. Air is colder/more dense in near-Arctic circle regions/in the winter than in the desert/in the summer, and this can affect optimum ECU settings for fuel/air mixes (for example). At present vehicle engines are set to "average" conditions. But by using temperature sensors, or geo-location (for example) and weather maps, we can finesse the setting of the ECU of a vehicle to suit the local climatic environment. As a vehicle drives from one temperature region to another/as the conditions change, we can change the mapping in the ECU.

We may have an urban driving mapping and a motorway driving mapping stored in the ECU or in a device linked to the ECU (or any other plurality of mappings) in the system and an external person may send a remote signal to select an appropriate setting (or the driver could set the mapping - e.g. using a GSM signal/phone signal).

Thus in some embodiments the ECU mapping can be adjusted whilst a driver is actually driving, possibly in real time/close to real time. The ECU mapping could be adaptive/dynamic - adapting or changing to the area/circumstances of the road, and/or adaptive to driver behaviour.

The geo-turning (e.g. with GPS) of the ECU could force low emission driving on a driver when they entered certain geographic areas (e.g. low-emission city centres).

The ability to have dynamic ECU control enables the same vehicle to be controlled remotely to drive in different ways, depending upon the mapping programmed into the ECU. This can change with time, or driver, or condition/measured data from the vehicle, or road/weather conditions, or for other reasons.

The invention is not limited to the embodiments described above, which may be varied within the scope of the accompanying claims. For example, the re-mapping may take place automatically at pre-set or user-adjustable intervals, or it may take place when particular performance indicators transcend a pre-set threshold. In an alternative embodiment, the location of the car 1 is determined with respect to the mobile telephone network 12 by determining the cell of the network it is in, so that the GPS receiver 20 is not required. In a further embodiment, the methods illustrated herein are used also or alternatively to re-programme the Electronic Control Unit 4 for the ESC system fitted to the car 1. For example, the control strategy for a hill descent system can be modified to take account of the fact that the vehicle is being driven off-road or in an area with steep gradients.

## Claims

1. Method of configuring an electronic control system (2,4) for controlling the operation of at least one component (3) of a vehicle (1),
the electronic control system (2,4) including:
a microcontroller (5);
programmable non-volatile memory (6),
wherein the microcontroller (5) is configured to process input signals from at least one vehicle sensor to provide output signals for controlling the at least one vehicle component (3) in accordance with programme data read at least partly from the programmable non-volatile memory (6); and
an interface (8) enabling a programming unit to programme at least part of the programme data into the programmable non-volatile memory (6),
which method includes:
obtaining data based on sensor signals and pertaining to the vehicle during its operation;
analysing the data based on sensor signals; and
determining an appropriate set of programme data based on the analysis; **characterised by**
causing a programming unit (10) on board the vehicle (1) to programme the appropriate set into the programmable non-volatile memory (6).

2. Method according to claim 1 comprising receiving externally originating programming signals at the interface from outside of the electronic control system;
using the externally originating programming signals to influence the set of programme data programmed in to the non-volatile memory by the programming unit (10).

3. Method according to claim 1 or claim 2 wherein the electronic control system has a wireless signal receiver, and wherein the method comprises programming the non-volatile memory (6) using wireless programming signals received by the receiver and passed to the interface.

4. Method according to any preceding claim comprising reducing the driving performance of the vehicle by programming in a set of programme data into the memory.

5. Method according to any one of the preceding claims, wherein the set of programme data includes at least one control map, including data representative of an operating envelope and/or adaptation parameters, for an electronic control system (2,4) comprising a map-based controller.

6. Method according to any one of the preceding claims, wherein the programming unit is comprised in a unit (10) connected to a port (9) of an on-board diagnostic system of the vehicle (1).

7. Method according to any one of the preceding claims, wherein the data based on sensor signals is obtained via a diagnostic unit (10) plugged into a port (9) for interrogating an on-board diagnostic system, wherein the diagnostic unit (10) communicates with the electronic control system (2,4) using a proprietary protocol of the electronic control system (2,4).

8. Method according to any preceding claim, wherein the data based on sensor signals and pertaining to the vehicle during its operation from the group:
includes data (i) indicative of a position of the vehicle (1), at least implicitly associated with timing information;
(ii) based on signals from at least one vehicle sensor.

9. Method according to any preceding claim, including obtaining at least one operator profile that indicates the operating style of at least one operator.

10. Method according to any preceding claim, wherein determining an appropriate set of programme data based on the analysis includes obtaining information for identifying an operator of the vehicle (1) and selecting an operator profile of the operator from one of a plurality of operator profiles associated with the vehicle (1).

11. Method according to any one of the preceding claims, wherein the electronic control system (2,4) comprises at least one Electronic Control Unit (2) for controlling at least a component of an engine (3).

12. Method according to claim 11, wherein determining an appropriate set of programme data includes establishing a set of programme data having an effect of improving the efficiency of the engine (3) under conditions to be expected and determined in accordance with the analysis.

13. System for configuring an electronic control system (2,4) for controlling the operation of at least one component (3) of a vehicle (1),
the electronic control system (2,4) including:
a microcontroller (5);
programmable non-volatile memory (6),
wherein the microcontroller (5) is configured to process input signals from at least one vehicle sensor to provide output signals for controlling the at least one vehicle component (3) in accordance with programme data read at least partly from the programmable non-volatile memory (6), which system includes
a programming unit (10) to programme programme data stored in the programmable non-volatile memory (6),
an interface for obtaining data based on sensor signals and pertaining to the vehicle (1) during its operation; and
a data processing system for analysing the data based on sensor signals and determining an appropriate set of programme data based on the analysis, **characterised in that**
the programming unit (10) is provided on board the vehicle (1) and **in that** the system is configured to cause the programming unit (10) to programme the appropriate set into the programmable non-volatile memory (6) of the electronic control system (2,4), the system optionally or preferably being configured to execute a method according to any one of claims 1-12.

14. System according to claim 13 comprising a wireless receiver adapted to receive external programming instructions and to convey them to the programming unit (10).

15. System according to claim 13 or claim 14, wherein the interface, or another interface, is adapted to obtain data based on sensor signals derived from the performance of the vehicle during its operation, the system (10,14) having information processing capabilities to perform a method according to any one of claims 1-12.
